(19) Europäisches Patentamt / European Patent Office / Office européen des brevets

(11) **EP 4 675 944 A1**

(12) **EUROPEAN PATENT APPLICATION**
published in accordance with Art. 153(4) EPC

(43) Date of publication:
**07.01.2026 Bulletin 2026/02**

(21) Application number: **24777816.0**

(22) Date of filing: **20.03.2024**

(51) International Patent Classification (IPC):
**H04B 17/30** (2015.01)    **H04L 43/0811** (2022.01)

(52) Cooperative Patent Classification (CPC):
**H04B 17/12; H04B 17/21; H04B 17/30;**
**H04L 25/02; H04L 43/0811**

(86) International application number:
**PCT/CN2024/082615**

(87) International publication number:
**WO 2024/199027 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **27.03.2023 CN 202310335664**

(71) Applicant: **Huawei Technologies Co., Ltd.**
**Shenzhen, Guangdong 518129 (CN)**

(72) Inventor: **GONG, Zhengwei**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **LINE SEQUENCE DETERMINATION METHOD AND RELATED APPARATUS**

(57)    This application provides an antenna ordering determining method and a related apparatus, to improve accuracy of antenna ordering detection. The method includes: obtaining a plurality of channel coefficients, where the plurality of channel coefficients include N channel coefficients corresponding to a first terminal, the N channel coefficients include channel coefficients of LOS channels between one antenna of the first terminal and N antennas of a network device, and N is an integer greater than 1; determining a target coefficient combination in M coefficient combinations corresponding to the first terminal, where a utility value of the target coefficient combination is greater than a utility value of another coefficient combination in the M coefficient combinations, each coefficient combination includes the N channel coefficients, channel coefficients included in any two of the M coefficient combinations are arranged in different manners, $M=N!$ or $M=(N!)/(2^k)$, $N!$ represents a factorial of N, and M and k are positive integers; and determining, based on a sequence of channel coefficients in the target coefficient combination, whether an antenna ordering is correct.

300

FIG. 3

## Description

This application claims priority to Chinese Patent Application No. 202310335664.2, filed with the China National Intellectual Property Administration on March 27, 2023 and entitled "ANTENNA ORDERING DETERMINING METHOD AND RELATED APPARATUS", which is incorporated herein by reference in its entirety.

## TECHNICAL FIELD

This application relates to the communication field, and in particular, to an antenna ordering determining method and a related apparatus.

## BACKGROUND

In a multi-input multi-output (multi-input multi-output, MIMO) system, two communication parties need to perform data transmission based on channel coefficients obtained through measurement and feedback on air interface channels. The air interface channels are transmission channels between a plurality of antennas of a terminal and a plurality of antennas of a network device. Antennas on a communication apparatus need to be connected to a radio unit (radio unit, RU), and a plurality of ports of the radio unit are connected to a plurality of ports on an antenna side by an installation worker. Therefore, there may be a risk of incorrect connection between the antennas and the radio unit due to a manual factor during connection. For example, theoretically, four ports A, B, C, and D of the radio unit are respectively connected to four ports 1, 2, 3, and 4 of the antennas. However, actually, A, B, C, and D may be respectively connected to 1, 3, 2, and 4. This incorrect connection manner causes a mismatch between the channel coefficients obtained through measurement and feedback on the air interface channels and actual channels. For example, a channel coefficient obtained from the port B should theoretically be a channel coefficient corresponding to an antenna 2, but is actually a channel coefficient corresponding to an antenna 3. Therefore, when the two communication parties perform data transmission based on the channel coefficient obtained under an incorrect connection, a loss of air interface transmission performance may be caused. In this way, in the MIMO system, it is particularly important to ensure correctness of a connection ordering between the ports of the radio unit and the antennas.

Currently, to ensure correctness of the connection ordering between the ports on the radio unit side and the antennas, downlink received strengths of the terminal before and after an antenna exchange may be separately measured, and a position of the antenna may be determined based on a difference between the two obtained downlink received strengths. However, the method depends on the measurement and feedback on the air interface channels, and measurement of the air interface channels is easily affected by other environment factors (for example, line-of-sight (line-of-sight, LOS) and non-line-of-sight (non-line-of-sight, NLOS) types, interference from a neighboring cell, and an angle direction of the terminal). Therefore, measurement accuracy is poor.

## SUMMARY

This application provides an antenna ordering determining method and a related apparatus, to improve accuracy of antenna ordering detection.

According to a first aspect, this application provides an antenna ordering determining method. The method may be applied to a network device. For example, the method may be performed by the network device, or may be performed by a component (such as a chip or a chip system) configured in the network device. Alternatively, the method may be performed by a logical module or software that can implement all or some functions of the network device. This is not limited in this application.

For example, the method includes: obtaining a plurality of channel coefficients, where the plurality of channel coefficients include N channel coefficients corresponding to a first terminal, the N channel coefficients include channel coefficients of LOS channels between one antenna of the first terminal and N antennas of a network device, and N is an integer greater than 1; determining a target coefficient combination in M coefficient combinations corresponding to the first terminal, where a utility value of the target coefficient combination is greater than a utility value of another coefficient combination in the M coefficient combinations, each coefficient combination includes the N channel coefficients, channel coefficients included in any two of the M coefficient combinations are arranged in different manners, $M=N!$ or $M=(N!)/(2^k)$, $N!$ represents a factorial of N, and M and k are positive integers; and determining, based on a sequence of channel coefficients in the target coefficient combination, whether an antenna ordering is correct.

The first terminal may include a plurality of antennas. In this application, a target antenna ordering may be determined based on the channel coefficients of the LOS channels between the antenna of the first terminal and the N antennas of the network device. Alternatively, a target antenna ordering may be determined based on channel coefficients of LOS channels between each of the plurality of antennas of the first terminal and the N antennas of the network device.

N LOS channels may be formed between one antenna of the first terminal and the N antennas of the network device, and one channel coefficient may be obtained from each LOS channel. In other words, the first terminal corresponds to at least N channel coefficients. The N channel coefficients may be arranged in total N! manners. Each arrangement manner is referred to as a coefficient combination. In this case, the first terminal may correspond to $M=N!$ or $M=(N!)/(2^k)$ coefficient combinations.

The antenna ordering is a connection ordering between the N antennas and N ports of a radio unit in the network device. Determining whether the antenna ordering is correct may be replaced with determining whether an antenna ordering of the current connection is consistent with a correct antenna ordering, or determining whether an antenna ordering of the current connection is consistent with a preset antenna ordering.

According to the method provided in this application, the antenna ordering is detected by using the obtained channel coefficients of the plurality of LOS channels, to effectively reduce impact of an environmental factor, and improve detection accuracy. In addition, based on a phase difference characteristic of the correct antenna ordering in the LOS channels, a combination of channel coefficients that meets a LOS channel characteristic is determined by traversing a plurality of combinations of the obtained channel coefficients of the plurality of LOS channels, to accurately detect the antenna ordering. After it is detected that the antenna ordering is incorrect, a technician may perform reconnection based on the combination of channel coefficients that meet the LOS channel characteristic, and does not need to manually exchange a connection ordering of antennas for a plurality of times, thereby reducing labor costs.

Optionally, before the plurality of channel coefficients are obtained, the method further includes: obtaining channel coefficients between the N antennas of the network device and a plurality of antennas of each of a plurality of terminals; determining, based on the plurality of channel coefficients corresponding to each terminal, whether a channel between each terminal and the network device is a LOS channel; and when the channel between each terminal and the network device is a LOS channel, determining a channel coefficient of the LOS channel as a channel coefficient included in the plurality of channel coefficients.

With reference to the first aspect, in some implementations of the first aspect, the N channel coefficients are obtained from the N ports of the radio unit, and the N ports of the radio unit are respectively connected to the N antennas.

It should be understood that, before the plurality of channel coefficients are obtained, the N antennas are connected to the N ports of the radio unit in a one-to-one manner, and the connection may be correct or incorrect. However, one channel coefficient may be obtained from each port of the radio unit regardless of whether the connection is correct or incorrect.

With reference to the first aspect, in some implementations of the first aspect, the M coefficient combinations correspond to M utility values. An $m^{th}$ utility value in the M utility values is: under an $m^{th}$ coefficient combination in the M coefficient combinations, a correlation coefficient between a phase difference sequence corresponding to channel coefficients and an equal phase difference sequence determined based on an antenna parameter.

The phase difference sequence corresponding to the channel coefficients is a sequence formed by a phase difference between an $i^{th}$ channel coefficient and a $j^{th}$ channel coefficient in the N channel coefficients. The equal phase difference sequence determined based on the antenna parameter is a sequence formed by a phase difference that is between an $i^{th}$ antenna and a $j^{th}$ antenna in the N antennas and that is determined based on an element spacing. i is any integer from 1 to N, j is an integer value other than i from 1 to N, and m is an integer from 1 to M.

After a value of i is determined, there may be (N-1) values of j. Therefore, there are (N-1) phase differences between the $i^{th}$ channel coefficient and the $j^{th}$ channel coefficient, and the (N-1) phase differences are arranged in a sequence based on the values of j, to obtain a phase difference sequence with a length of N-1.

Same as the channel coefficient, there are (N-1) phase differences determined between the $i^{th}$ antenna and the $j^{th}$ antenna, and the (N-1) phase differences are arranged in a sequence based on the values of j, to obtain a phase difference sequence with a length of N-1.

In this case, the $m^{th}$ utility value in the M utility values is a correlation coefficient between the two phase difference sequences with a length of N-1.

Optionally, the $m^{th}$ utility value in the M utility values may alternatively be a Euclidean distance between the two phase difference sequences with a length of N-1. However, when the utility value is the Euclidean distance, the utility value of the target coefficient combination is less than a utility value of another coefficient combination in a plurality of coefficient combinations.

With reference to the first aspect, in some implementations of the first aspect, the plurality of channel coefficients further include N channel coefficients corresponding to a second terminal. The N channel coefficients corresponding to the second terminal include channel coefficients of LOS channels between one antenna of the second terminal and the N antennas of the network device.

Each of the M coefficient combinations corresponding to the second terminal includes N channel coefficients, and channel coefficients included in any two of the M coefficient combinations are arranged in different manners.

For example, determining the target coefficient combination in the M coefficient combinations corresponding to the first terminal includes: obtaining M groups of coefficient combinations based on the M coefficient combinations corresponding to the first terminal and the M coefficient combinations corresponding to the second terminal, where an $m^{th}$ group of coefficient combinations in the M groups of coefficient combinations includes a first coefficient combination and a second coefficient combination, the first coefficient combination is an $m^{th}$ coefficient combination in the M coefficient combinations corresponding to the first terminal, the second coefficient combination is an $m^{th}$ coefficient combination in the M coefficient combinations corresponding to the second terminal, an arrangement sequence of channel coefficients in the first coefficient combination is the same as an arrangement sequence of channel coefficients in the second coefficient combination, and m is an integer from 1 to M; and determining, based on the M groups of coefficient combinations, the target coefficient combination in the M coefficient combinations corresponding to the first terminal.

The first terminal and the second terminal are different terminals, and the N channel coefficients corresponding to the first terminal are different from M channel coefficients corresponding to the second terminal. However, it should be understood that both the N channel coefficients corresponding to the second terminal and the N channel coefficients corresponding to the first terminal are obtained from the N ports of the radio unit of the network device.

It should be understood that, when the plurality of channel coefficients include the N channel coefficients corresponding to the first terminal and N channels corresponding to the second terminal, the target coefficient combination may be one of the M coefficient combinations corresponding to the first terminal, or may be one of the M coefficient combinations corresponding to the second terminal. However, the two coefficient combinations should belong to a same group of coefficient combinations.

With reference to the first aspect, in some implementations of the first aspect, the M groups of coefficient combinations correspond to M utility values. An $m^{th}$ utility value in the M utility values is: under the $m^{th}$ group of coefficient combinations in the M groups of coefficient combinations, a correlation coefficient between a phase difference sequence corresponding to a difference between a phase difference of the first coefficient combination and a phase difference of the second coefficient combination and an equal phase difference sequence determined based on an antenna parameter.

The phase difference of the first coefficient combination is the phase difference between the $i^{th}$ channel coefficient and the $j^{th}$ channel coefficient in the N channel coefficients. The phase difference of the second coefficient combination is a phase difference between an $i^{th}$ channel coefficient and a $j^{th}$ channel coefficient in the N channel coefficients. The equal phase difference sequence determined based on the antenna parameter is the phase difference that is between the $i^{th}$ antenna and the $j^{th}$ antenna in the N antennas and that is determined based on the element spacing. i is any integer from 1 to N, and j is an integer value other than i from 1 to N.

After a value of i is determined, there may be (N-1) values of j. Therefore, there are (N-1) phase differences in the first coefficient combination and (N-1) phase differences in the second coefficient combination. That is, two phase differences may be obtained when j is of a same value. (N-1) phase differences may be obtained by performing subtraction between phase differences obtained when j is of a same value, and the (N-1) phase differences are arranged in a sequence based on the values of j, to obtain a phase difference sequence with a length of N-1. The phase difference sequence with a length of N-1 is the phase difference sequence corresponding to the phase differences of the first coefficient combination and the phase differences of the second coefficient combination.

Same as the channel coefficient, there are (N-1) phase differences determined between the $i^{th}$ antenna and the $j^{th}$ antenna, and the (N-1) phase differences are arranged in a sequence based on the values of j, to obtain a phase difference sequence with a length of N-1.

In this case, the $m^{th}$ utility value in the M utility values is a correlation coefficient between the two phase difference sequences with a length of N-1.

Optionally, the $m^{th}$ utility value in the M utility values may alternatively be a Euclidean distance between the two phase difference sequences with a length of N-1. However, when the utility value is the Euclidean distance, the utility value of the target coefficient combination is less than a utility value of another coefficient combination in a plurality of coefficient combinations.

According to a second aspect, this application provides an antenna ordering determining apparatus, including modules or units configured to perform the method according to any one of the first aspect and the possible implementations of the first aspect.

It should be understood that each module or unit may implement a corresponding function by executing a computer program. The module or the unit may be a hardware circuit, may be software, or may be implemented by the hardware circuit in combination with the software.

According to a third aspect, this application provides another antenna ordering determining apparatus, including a processor. The processor is configured to perform the method according to any one of the first aspect and the possible implementations of the first aspect.

The apparatus may further include a memory, configured to store instructions and data. The memory is coupled to the processor, and when executing the instructions stored in the memory, the processor may implement the method described in the foregoing aspects.

The apparatus may further include a communication interface. The communication interface is used by the apparatus to communicate with another device. For example, the communication interface may be a transceiver, a circuit, a bus, a module, or another type of communication interface.

In a possible design, the communication apparatus is a network device described above.

In another possible design, the communication apparatus is a chip, a chip system, or the like configured in the network device.

According to a fourth aspect, this application provides a processing apparatus, including a processor and a memory. The processor is configured to read instructions stored in the memory, and may receive a signal by using a receiver, and transmit a signal by using a transmitter, to perform the method according to any one of the first aspect and the possible implementations of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into a same chip, or may be separately disposed in different chips. A type of the memory and a manner in which the memory and the processor are disposed are not limited in this embodiment of this application.

It should be understood that a related data exchange process, for example, obtaining a plurality of channel coefficients, may be a process of receiving the plurality of channel coefficients from the processor, and sending capability information may be a process of sending output capability information by the processor. Specifically, data output by the processor may be output to a transmitter, and input data received by the processor may be from the receiver. The transmitter and the receiver may be collectively referred to as a transceiver.

Optionally, the processing apparatus in the fourth aspect is a chip or a chip system. The processor may be implemented by using hardware or software. When the processor is implemented by using the hardware, the processor may be a logic circuit, an integrated circuit, or the like. When the processor is implemented by using the software, the processor may be a general-purpose processor implemented by reading software code stored in a memory, where the memory may be integrated into the processor, or may be located outside the processor and exist independently.

According to a fifth aspect, this application provides a chip system. The chip system includes at least one processor, configured to support implementation of a function according to any one of the first aspect and the possible implementations of the first aspect, for example, processing data in the foregoing method.

In a possible design, the chip system further includes a memory, the memory is configured to store program instructions and data, and the memory is located inside or outside the processor.

Optionally, the chip system may include a chip, or may include a chip and another discrete component.

According to a sixth aspect, this application provides a computer-readable storage medium. The computer-readable storage medium stores a computer program (which may also be referred to as code or instructions). When the computer program is run on a computer, the computer is enabled to perform the method according to any one of the first aspect and the possible implementations of the first aspect.

According to a seventh aspect, this application provides a computer program product. The computer program product includes a computer program (which may also be referred to as code or instructions). When the computer program is run, a computer is enabled to perform the method in any one of the first aspect and the possible implementations of the first aspect.

It should be understood that the second aspect to the seventh aspect of this application correspond to the technical solutions of the first aspect of this application, and beneficial effects achieved by the aspects and the corresponding feasible implementations are similar. Details are not described again.

## BRIEF DESCRIPTION OF DRAWINGS

FIG. 1 is a diagram of a communication scenario to which an embodiment of this application is applicable;

FIG. 2 is a diagram of a connection manner between a plurality of antennas of a network device and a radio unit;

FIG. 3 is a schematic flowchart of an antenna ordering determining method according to an embodiment of this application;

FIG. 4 is a diagram of channels between one terminal and a plurality of antennas of a network device according to an embodiment of this application;

FIG. 5 is a diagram of channels between two terminals and a plurality of antennas of a network device according to an embodiment of this application;

FIG. 6 is a block diagram of an antenna ordering determining apparatus according to an embodiment of this application; and

FIG. 7 is a block diagram of another antenna ordering determining apparatus according to an embodiment of this application.

**DESCRIPTION OF EMBODIMENTS**

The following describes the technical solutions of this application with reference to the accompanying drawings.

The technical solutions provided in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) mobile communication system, a new radio (new radio, NR) system or another evolved communication system, a next-generation mobile communication system of a 5G communication system, a 6th generation (6th generation, 6G) communication system, or a future communication system.

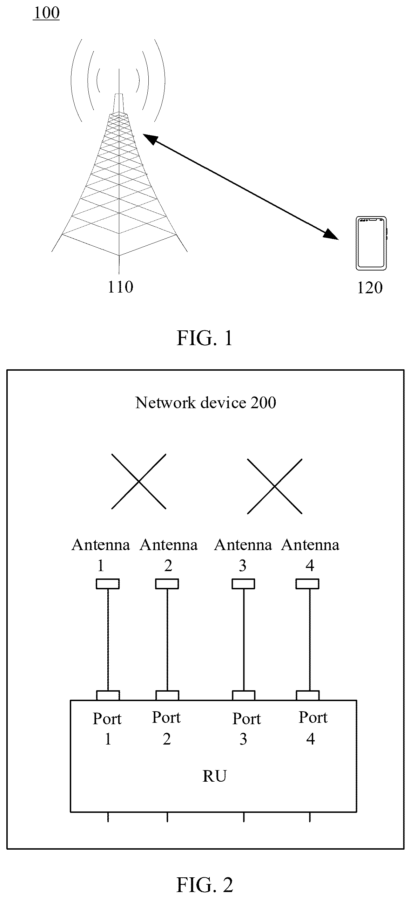

For ease of understanding of embodiments of this application, a communication system to which an embodiment of this application is applicable is first described in detail with reference to FIG. 1.

FIG. 1 is a diagram of a communication scenario 100 to which an embodiment of this application is applicable. As shown in FIG. 1, the communication scenario 100 includes at least two communication devices, for example, a network device 110 and a terminal device 120. Data communication may be performed between the network device 110 and the terminal device 120 through a wireless connection. Specifically, the network device 110 may send downlink data to the terminal device 120, and the terminal device 120 may send uplink data to the network device 110.

The terminal device in embodiments of this application is also referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device with a wireless connection function. Currently, examples of some terminal devices include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN), or the like. This is not limited in this application.

As an example rather than a limitation, in this application, the terminal device may be a terminal device in an Internet of things (Internet of things, IoT) system. The Internet of things is an important part in future information technology development. A main technical feature of the Internet of things is to connect things to a network by using a communication technology, to implement a smart network for human-machine interconnection and thing-thing interconnection. For example, the terminal device in embodiments of this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or accessories of a user. The wearable device is not only a hardware device, and can implement powerful functions through software support, data interaction, and cloud interaction. In a broad sense, the wearable intelligent device includes full-featured and large-sized devices that can implement all or a part of functions without depending on smartphones, for example, smart watches or smart glasses, and includes devices that focus on only one type of application function and need to collaboratively work with other devices such as smartphones, for example, various smart bands or smart jewelry for monitoring physical signs.

By way of example, and not limitation, in embodiments of this application, the terminal device may alternatively be a terminal device in machine type communication (machine type communication, MTC). In addition, the terminal device may alternatively be a vehicle-mounted module, a vehicle-mounted assembly, a vehicle-mounted component, a vehicle-mounted chip, a vehicle-mounted unit, or the like that is built in a vehicle as one or more components or units. The vehicle may implement the method provided in this application by using the vehicle-mounted module, vehicle-mounted assembly, vehicle-mounted component, vehicle-mounted chip, vehicle-mounted unit, or the like that is built in the vehicle. Therefore, embodiments of this application may also be applied to the Internet of vehicles, for example, vehicle to everything (vehicle to everything, V2X), a long term evolution-vehicle (long term evolution-vehicle, LTE-V), or a vehicle-to-vehicle (vehicle-to-vehicle, V2V) technology.

The network device in embodiments of this application may be an access network device or a radio access network device. The network device may be a transmission reception point (transmission reception point, TRP), an evolved NodeB (evolved NodeB, eNB or eNodeB) in an LTE system, a home base station (for example, a home evolved NodeB or a home NodeB, HNB), a baseband unit (baseband unit, BBU), or a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, or may be an access point (access point, AP) in a WLAN, or may be a gNB in an NR system. Alternatively, the scheduling node may be a city base station, a micro base station, a pico base station, a femto base station, or the like, or may be a terminal device with a scheduling function. This is not limited in this application.

In a network structure, the network device may include a central unit (central unit, CU) node, a distributed unit (distributed unit, DU) node, a radio access network (radio access network, RAN) device including a CU node and a DU node, or a RAN device including a CU control plane node (CU-CP node), a CU user plane node (CU-UP node), and a DU node.

The network device provides a service for a cell, and the terminal device uses a transmission resource (for example, a frequency domain resource or a spectrum resource) allocated by the network device to communicate with the cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service.

It should be understood that FIG. 1 is merely a simplified diagram for ease of understanding. The communication system 100 may further include another device, which is not shown in FIG. 1.

A multi-input multi-output (multi-input multi-output, MIMO) system is an effective method for improving transmission performance in space domain. In the MIMO system, a transmit side needs to obtain spatial preprocessing information based on antenna deployment information and air interface channels between a network side and a terminal side. That is, two communication parties need to perform data transmission based on channel coefficients obtained through measurement and feedback on the air interface channels, and the air interface channels are channels formed between an antenna on the terminal side and an antenna on the network device side. In other words, the network device and the terminal device shown in FIG. 1 each may include a plurality of antennas, and the plurality of antennas included in each device need to be connected to a radio unit. With reference to FIG. 2, the following describes a connection manner between a plurality of antennas of the network device and the radio unit.

FIG. 2 is a diagram of a connection manner between a plurality of antennas of a network device and a radio unit. As shown in FIG. 2, the network device 200 includes four antennas and one radio unit. The four antennas are an antenna 1, an antenna 2, an antenna 3, and an antenna 4. Four ports included in the radio unit are a port 1, a port 2, a port 3, and a port 4. In addition, the four antennas are connected to the four ports of the radio unit in a one-to-one manner.

Theoretically, the four antennas are connected to the four ports of the radio unit as follows: the antenna 1 is connected to the port 1, the antenna 2 is connected to the port 2, the antenna 3 is connected to the port 3, and the antenna 4 is connected to the port 4. However, actually, there may be a risk of incorrect connection between the antenna and the radio unit due to a human factor or another factor. For example, actually, the four ports 1, 2, 3, and 4 are respectively connected to the four antennas 1, 3, 2, and 4 in sequence.

This incorrect connection manner between the antenna and the radio unit causes a mismatch between channel coefficients obtained through measurement and feedback on air interface channels and actual channels. For example, a channel coefficient obtained from the port 2 should theoretically be a channel coefficient corresponding to the antenna 2, but is actually a channel coefficient corresponding to the antenna 3. Therefore, when the two communication parties perform data transmission based on the channel coefficient obtained under an incorrect connection, a loss of air interface transmission performance may be caused. In this way, in a MIMO system, it is particularly important to ensure correctness of a connection ordering between the ports of the radio unit and the antennas.

Currently, to ensure correctness of the connection ordering between the ports on the radio unit side and the ports on the antenna side, correctness of an antenna ordering is usually determined by checking, under a specific connection ordering between the radio unit and the antenna, whether a signal strength and/or a correlation characteristic of a spatial signal corresponding to measurement and feedback of a terminal meets a specified characteristic, and a specific implementation procedure is as follows. 1. Uplink channel information of at least one terminal is measured and a spatial correlation matrix of the channel information is estimated, so that an antenna with a large correlation index (strong correlation) is determined as a co-polarized antenna, and an antenna with a small correlation index (weak correlation) is determined as a hetero-polarized antenna. 2. Column information of a group of antennas is exchanged, downlink signal received strengths (for example, reference signal received power (reference signal received power, RSRP)) of the terminal before and after switching is separately measured, and corresponding column position information is determined based on a difference between corresponding received signal strengths before and after switching. However, the method depends on measurement and feedback on air interface channels, and measurement of the air interface channels is easily affected by other environment factors (for example, a LOS channel, a non-line-of-sight NLOS channel, interference from a neighboring cell, and an angle direction of the terminal). Therefore, measurement accuracy is poor.

In view of this, this application provides an antenna ordering determining method and a related apparatus. In the method, a connection ordering between antennas and a plurality of ports of a radio unit is detected by using obtained channel coefficients of a plurality of LOS channels between a terminal and a network device. This effectively reduces impact of an environmental factor (for example, an NLOS channel), and improves detection accuracy.

Before the method provided in this embodiment of this application is described, the following descriptions are first provided.

First, in embodiments shown below, the terms and English abbreviations such as MIMO and LON are examples provided for ease of description, and shall not constitute any limitation on this application. This application does not exclude a possibility of defining another term that can implement a same or similar function in an existing or a future protocol.

Second, "first", "second", and various numeric numbers in the following embodiments are merely distinguished for ease of description, and are not intended to limit the scope of embodiments of this application. For example, different terminals are distinguished.

Third, "at least one" means one or more, and "a plurality of" means two or more. The term "and/or" describes an association relationship between associated objects and may indicate three relationships. For example, A and/or B may indicate the following cases: Only A exists, both A and B exist, and only B exists. A and B may be singular or plural. The character "/" generally indicates an "or" relationship between the associated objects. At least one of the following items or a similar expression thereof indicates any combination of these items, including a single item or any combination of a plurality of items. For example, at least one item of a, b, and c may indicate a, b, c, a and b, a and c, b and c, or a, b, and c, where a, b, and c may be single or plural.

Fourth, the term such as "example" or "for example" represents an example, an illustration, or a description. Any embodiment or design scheme described as an "example" or "for example" in this application should not be explained as being more preferred or having more advantages than another embodiment or design scheme. Exactly, use of the term like "example" or "for example" is intended to present a related concept in a specific manner.

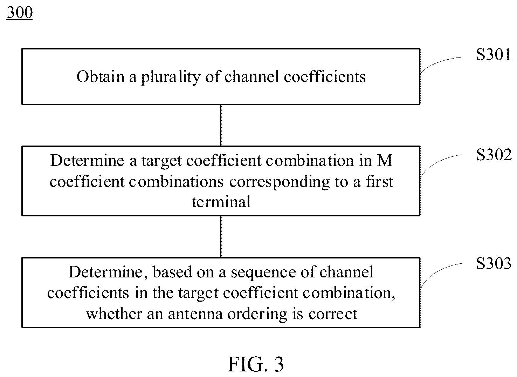

The following describes in detail the antenna ordering determining method provided in this embodiment of this application with reference to FIG. 3. The method may be performed by a network device, or may be performed by a chip, a chip system, or a processor that supports the network device in implementing the method, or may be implemented by a logical module or software that can implement all or some functions of the network device.

FIG. 3 is a schematic flowchart of an antenna ordering determining method 300 according to an embodiment of this application. As shown in FIG. 3, the method 300 may include S301 to S303. The following describes the steps in detail with reference to FIG. 3. It should be understood that an antenna ordering in this application is a connection ordering between antennas included in a network device and ports of a radio unit in the network device.

S301: Obtain a plurality of channel coefficients.

The plurality of channel coefficients include N channel coefficients corresponding to a first terminal. The N channel coefficients include channel coefficients of LOS channels between one antenna of the first terminal and N antennas of the network device, and N is an integer greater than 1.

It should be understood that the first terminal may include a plurality of antennas, N LOS channels may be formed between each antenna of the first terminal and the N antennas of the network device, and one channel coefficient may be obtained from each LOS channel.

S302: Determine a target coefficient combination in M coefficient combinations corresponding to the first terminal.

A utility value of the target coefficient combination is greater than a utility value of another coefficient combination in the M coefficient combinations. Each coefficient combination includes N channel coefficients, channel coefficients included in any two of the M coefficient combinations are arranged in different manners, and M=N! or M=(N!)/(2^k), where N! represents a factorial of N, and M and k are positive integers.

For example, in a scenario in which antenna flipping is asymmetric, M=N!.

For example, in a scenario in which antennas flipping is symmetric, $M=(N!)/(2^k)$. A value of k is related to polarization types of the N antennas, and antenna polarization types include positive polarization and negative polarization. For example, when the N antennas are all of a same polarization type, the value of k is 2. For another example, when the N antennas include antennas of two polarization types, the value of k is 4.

Because the N antennas of the network device are respectively connected to N ports of the RU in the network device, the N channel coefficients may be obtained from the N ports of the RU.

It should be understood that each arrangement manner is referred to as a coefficient combination. In N coefficients included in each coefficient combination, an $i^{th}$ channel coefficient may be considered as a channel coefficient obtained from an $i^{th}$ port, but may not be actually obtained from the $i^{th}$ port.

For example, the radio unit includes a port 1, a port 2, and a port 3, the antennas include an antenna 1, an antenna 2, and an antenna 3, and the three ports are respectively connected to the three antennas. It is assumed that a channel coefficient actually obtained from the port 1 of the radio unit is h1, a channel coefficient actually obtained from the port 2 is h2, and a channel coefficient actually obtained from the port 3 is h3. In addition, it is assumed that h1 is a channel coefficient corresponding to the antenna 1, h2 is a channel coefficient corresponding to the antenna 2, and h3 is a channel coefficient corresponding to the antenna 3. The following six arrangement manners may be obtained (that is, six coefficient combinations are obtained) based on all permutations of the three channel coefficients: (h1, h2, h3), (h1, h3, h2), (h2, h1, h3), (h2, h3, h1), (h3, h1, h2), and (h3, h2, h1). The coefficient combination (h3, h1, h2) is used as an example. h3 may be considered as being obtained from a first port, h1 may be considered as being obtained from a second port, and h3 may be considered as being obtained from a third port.

S303: Determine, based on a sequence of channel coefficients in the target coefficient combination, whether an antenna ordering is correct. In other words, whether an antenna ordering of the current connection is consistent with a correct antenna ordering is determined based on the sequence of the channel coefficients in the target coefficient combination. In other words, whether the antenna ordering of the current connection is consistent with a preset antenna ordering is determined based on the sequence of the channel coefficients in the target coefficient combination.

It should be understood that, before S301 is performed, the N antennas are connected to the N ports of the radio unit in a one-to-one manner, and a connection ordering (which may be referred to as an actual antenna ordering or a current antenna ordering) may be correct or incorrect.

With reference to the foregoing example in which N=3, it is assumed that the correct antenna ordering (or the preset antenna ordering) is that the antenna 1 is connected to the port 1, the antenna 2 is connected to the port 2, and the antenna 3 is connected to the port 3. If the target coefficient combination is (h1, h2, h3), it indicates that the actual antenna ordering is correct. If the target coefficient combination is not (h1, h2, h3), it indicates that the actual antenna ordering is incorrect. For example, the target coefficient combination is (h3, h1, h2). It indicates that the channel coefficient h3 obtained from the port 1 of the radio unit actually corresponds to the antenna 3, the channel coefficient obtained from the port 2 of the radio unit actually corresponds to the antenna 1, and the channel coefficient h2 obtained from the port 3 of the radio unit actually corresponds to the antenna 2. h1 is a channel coefficient corresponding to the antenna 1, h2 is a channel coefficient corresponding to the antenna 2, and h3 is a channel coefficient corresponding to the antenna 3. Therefore, an actual antenna ordering determined based on the coefficient combination is: The port 1 is connected to the antenna 3, the port 2 is connected to the antenna 1, and the port 3 is connected to the antenna 2. For example, after it is determined that the antenna ordering is incorrect, based on the coefficient combination, a field engineer may simultaneously connect an antenna currently connected to the port 1 of the radio unit to the port 3 of the radio unit, connect an antenna currently connected to the port 2 of the radio unit to the port 1 of the radio unit, and connect an antenna currently connected to the port 3 of the radio unit to the port 2 of the radio unit, to obtain the correct antenna ordering.

In this embodiment of this application, the antenna ordering is detected by using the obtained channel coefficients of the plurality of LOS channels, to effectively reduce impact of an environmental factor, and improve detection accuracy. In addition, based on a phase difference characteristic of the correct antenna ordering in the LOS channels, a combination of channel coefficients that meets a LOS channel characteristic is determined by traversing a plurality of combinations of the obtained channel coefficients of the plurality of LOS channels, to accurately detect the antenna ordering. After it is detected that the antenna ordering is incorrect, the technician may perform reconnection based on the combination of channel coefficients that meet the LOS channel characteristic, and does not need to manually exchange a connection ordering of antennas for a plurality of times, thereby reducing labor costs.

Optionally, the method 300 further includes: obtaining channel coefficients between the N antennas of the network device and a plurality of antennas of a plurality of terminals, where the channel coefficient may be a coefficient of an uplink channel or a coefficient of a downlink channel; determining, based on a plurality of channel coefficients corresponding to each terminal, whether a channel between the terminal and the network device is a LOS channel; and performing S301 when a type of the channel between the terminal and the network device is the LOS channel.

For the method for determining the channel coefficient between the network device and the terminal and a method for determining a channel type (for example, a LOS channel or an NLOS channel) in this application, refer to descriptions in the conventional technology. Details are not described herein.

Optionally, the M coefficient combinations correspond to M utility values. An $m^{th}$ utility value in the M utility values is: under an $m^{th}$ coefficient combination in the M coefficient combinations, a Euclidean distance or a correlation coefficient between a phase difference sequence corresponding to channel coefficients and an equal phase difference sequence determined based on an antenna parameter.

The phase difference sequence corresponding to the channel coefficients is a sequence formed by a phase difference between an $i^{th}$ channel coefficient and a $j^{th}$ channel coefficient in the N channel coefficients. The equal phase difference sequence determined based on the antenna parameter is a phase difference that is between an $i^{th}$ antenna and a $j^{th}$ antenna in the N antennas and that is determined based on an element spacing. i is any integer from 1 to N, j is an integer value other than i from 1 to N, and m is an integer from 1 to M.

It should be understood that the antenna parameter includes an antenna spacing, and the antenna spacing is an antenna element spacing.

For example, under the mth coefficient combination, a phase difference between the channel coefficients satisfies:

$$\gamma_j = h_i - h_j \qquad (1)$$

Herein, $h_i$ represents the ith channel coefficient in the N channel coefficients, $h_j$ represents the jth channel coefficient in the N channel coefficients, and $\gamma_j$ represents the phase difference between the ith channel coefficient and the jth channel coefficient.

Because the value of j is an integer other than i from 1 to N, the phase difference sequence corresponding to the channel coefficients may be a sequence formed by $\varphi_j$.

With reference to the example in which N=3, m is an integer from 1 to 6, that is, m=1, 2, ..., or 6, i is any integer from 1 to 3, that is, i=1, 2, or 3, and j is an integer value other than i from 1 to 3. For example, when i=1, values of j are 2 and 3. The coefficient combination (h1, h2, h3) is used as an example. When i=3, phase differences between channel coefficients under the coefficient combination satisfy:

$$\gamma_1 = h_3 - h_1, \ \gamma_2 = h_3 - h_2 \qquad (2)$$

In this case, a phase difference sequence corresponding to the channel coefficients is $\gamma_1, \gamma_2$.

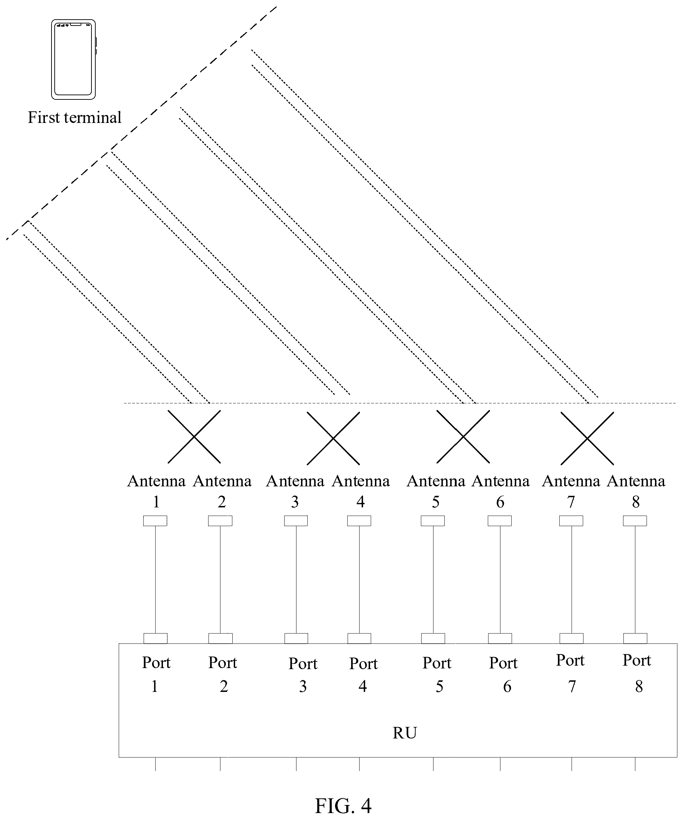

With reference to FIG. 4, the following describes the equal phase difference sequence determined based on the antenna parameter.

As shown in FIG. 4, eight LOS channels are formed between one antenna of a first terminal and eight antennas of a network device, and the eight antennas are respectively connected to eight ports of an RU in a one-to-one manner.

It should be understood that a propagation difference of the LOS channels mainly lies in an optical path difference, that is, propagation distances from one antenna to different antennas.

For example, for a plurality of antennas with a known antenna spacing (or referred to as an element spacing), a phase $\theta_i$ corresponding to a channel between the first terminal and an ith antenna in the plurality of antennas satisfies:

$$\theta_i = \frac{D_i}{\lambda} 2\pi \qquad (3)$$

Herein, $D_i$ represents a line-of-sight transmission distance from the antenna of the first terminal to an ith antenna of the network device, and $\lambda$ is a wavelength of an electromagnetic wave transmitted by the first terminal.

It may be learned from the formula (3) that a phase difference corresponding to a channel between the antenna of the first terminal and the ith antenna of the network device and a channel between the antenna of the first terminal and a jth antenna of the network device satisfies:

$$\theta_i - \theta_j = \frac{D_i - D_j}{\lambda} 2\pi \qquad (4)$$

Herein, $\theta_j$ represents a phase corresponding to a channel between the first terminal and the jth antenna in the plurality of antennas, and $D_j$ represents a line-of-sight transmission distance from the antenna of the first terminal to the jth antenna of the network device.

Azimuths of the first terminal relative to the plurality of antennas of the network device are fixed. Therefore, for the first terminal, $D_i$ - $D_j$ in the formula (4) is related to an azimuth $\varphi$ of the first terminal relative to the antennas of the network device and an antenna spacing $\Delta$, and a relationship between the azimuth $\varphi$, the antenna spacing $\Delta$, and $D_i$ - $D_j$ satisfies:

$$D_i - D_j = \Delta_{i,j} \cdot f(\varphi) \qquad (5)$$

Herein, $\Delta_{i,j}$ represents a spacing between the ith antenna and the jth antenna of the network device, and $f(\varphi)$ represents a trigonometric function with respect to the azimuth $\varphi$, for example, a cosine function. However, it should be noted that the antenna spacing in this application is a spacing between two antennas of a same polarization type.

As shown in FIG. 4, when the ports of the radio unit of the network device are correctly connected to the antennas (that is, an antenna 1 is connected to a port 1, an antenna 2 is connected to a port 2, ..., and an antenna 8 is connected to a port 8), a phase difference $\eta_j$ between the ith antenna and the jth antenna satisfies:

$$\eta_j = \theta_i - \theta_j = \frac{\Delta_{i,j}}{\lambda} \cdot 2\pi \cdot f(\varphi) \qquad (6)$$

It can be learned from the formula (6) that the phase difference between the antennas is related to the antenna spacing and the azimuth of the terminal relative to the antenna of the network device.

In a possible design, if the plurality of antennas of the network device are deployed at an equal spacing, that is, $\Delta_{i,j}$ is a known constant, a phase difference $\eta_j$ between the $i$th antenna and the $j$th antenna satisfies:

$$\eta_j = \theta_i - \theta_j = \frac{j-i}{\lambda} \Delta_= \cdot 2\pi \cdot f(\varphi) \qquad (7)$$

Herein, $\Delta_=$ represents a spacing between any two adjacent antennas.

It can be learned from the formula (7) that, in a correct antenna ordering, phase differences between the antenna of the first terminal and the plurality of antennas (the plurality of antennas are deployed at an equal spacing) of the network device are an arithmetic sequence.

Because the value of j is an integer other than i from 1 to N, the equal phase difference sequence determined based on the antenna parameter may be a sequence formed by $\eta_j$.

With reference to the example in which N=3, when i=3, phase differences between the $i$th antenna and the $j$th antenna satisfy:

$$\eta_1 = \theta_3 - \theta_1 = \frac{1-3}{\lambda} \Delta_= \cdot 2\pi \cdot f(\varphi), \quad \eta_2 = \theta_3 - \theta_2 = \frac{2-1}{\lambda} \Delta_= \cdot 2\pi \cdot f(\varphi)$$

In this case, the equal phase difference sequence determined based on the antenna parameter is $\eta_1$, $\eta_2$.

Therefore, an obtained $m$th utility value A in M utility values satisfies:

$$A = U(\gamma_1, \gamma_2, \eta_1, \eta_2)$$

The function U() may be a preset function, and the function may be a function for calculating a correlation coefficient, or a function for calculating a Euclidean distance. However, it should be understood that when the function is the function for calculating the Euclidean distance, the utility value of the target coefficient combination is less than the utility value of the another coefficient combination in the M coefficient combinations.

Optionally, the plurality of channel coefficients further include N channel coefficients corresponding to a second terminal. The N channel coefficients corresponding to the second terminal include channel coefficients of LOS channels between one antenna of the second terminal and the N antennas of the network device.

Each of M coefficient combinations corresponding to the second terminal includes N channel coefficients, and channel coefficients included in any two of the M coefficient combinations corresponding to the second terminal are arranged in different manners.

The first terminal and the second terminal are different terminals, and the N channel coefficients corresponding to the first terminal are different from the N channel coefficients corresponding to the second terminal. However, it should be understood that the N channel coefficients corresponding to the second terminal are also obtained from the N ports of the radio unit of the network device.

In S302, determining the target coefficient combination in the M coefficient combinations corresponding to the first terminal includes: obtaining M groups of coefficient combinations based on the M coefficient combinations corresponding to the first terminal and the M coefficient combinations corresponding to the second terminal, where an $m$th group of coefficient combinations in the M groups of coefficient combinations includes a first coefficient combination and a second coefficient combination, the first coefficient combination is an $m$th coefficient combination in the M coefficient combinations corresponding to the first terminal, the second coefficient combination is an $m$th coefficient combination in the M coefficient combinations corresponding to the second terminal, an arrangement sequence of channel coefficients in the first coefficient combination is the same as an arrangement sequence of channel coefficients in the second coefficient combination, and m is an integer from 1 to M; and determining, based on the M groups of coefficient combinations, the target coefficient combination in the M coefficient combinations corresponding to the first terminal.

The target coefficient combination may be one of the M coefficient combinations corresponding to the first terminal, or may be one of the M coefficient combinations corresponding to the second terminal. The M groups of coefficient combinations correspond to M utility values. Therefore, a utility value of a coefficient combination group in which the target coefficient combination is located is greater than a utility value of another coefficient combination in the M groups of coefficient combinations.

With reference to the example in which N=3, h1, h2, and h3 are three channel coefficients corresponding to the first terminal, and three channel coefficients corresponding to the second terminal are h1', h2', and h3'. It is assumed that a channel coefficient actually obtained from the port 1 of the radio unit is h1', a channel coefficient actually obtained from the port 2 of the radio unit is h2', and a channel coefficient actually obtained from the port 3 of the radio unit is h3'. In addition, it is assumed that h1' is a channel coefficient corresponding to the antenna 1, h2' is a channel coefficient corresponding to the antenna 2, and h3' is a channel coefficient corresponding to the antenna 3. The following six arrangement manners may be obtained (that is, six coefficient combinations are obtained) based on all permutations of the three channel coefficients: (h1', h2', h3'), (h1', h3', h2'), (h2', h1', h3'), (h2', h3', h1'), (h3', h1', h2'), and (h3', h2', h1').

It should be understood that, in three coefficients included in each of the foregoing six arrangement manners, the $i^{th}$ channel coefficient may be considered as a channel coefficient obtained from an $i^{th}$ port, but may not be actually obtained from the $i^{th}$ port. The coefficient combination (h3', h1', h2') is used as an example. h3' may be considered as being obtained from a first port, h1' may be considered as being obtained from a second port, and h3' may be considered as being obtained from a third port.

For example, (h1', h2', h3') and (h1, h2, h3) may be a group of coefficient combinations. (h1', h3', h2'), and (h1, h3, h2) may be a group of coefficient combinations. (h2', h1', h3') and (h2, h1, h3) may be a group of coefficient combinations. (h2', h3', h1') and (h2, h3, h1) may be a group of coefficient combinations. (h3', h1', h2') and (h3, h1, h2) may be a group of coefficient combinations. (h3', h2', h1') and (h3, h2, h1) may be a group of coefficient combinations. The target coefficient combination may be any one group of the foregoing coefficient combinations.

Optionally, an $m^{th}$ utility value in the M utility values is: under the $m^{th}$ group of coefficient combinations in the M groups of coefficient combinations, a Euclidean distance or a correlation coefficient between a phase difference sequence corresponding to a difference between a phase difference of the first coefficient combination and a phase difference of the second coefficient combination and the equal phase difference sequence determined based on the antenna parameter.

The phase difference of the first coefficient combination is a phase difference between an $i^{th}$ channel coefficient and a $j^{th}$ channel coefficient in the N channel coefficients. The phase difference of the second coefficient combination is a phase difference between an $i^{th}$ channel coefficient and a $j^{th}$ channel coefficient in the N channel coefficients. The equal phase difference sequence determined based on the antenna parameter is the phase difference that is between the $i^{th}$ antenna and the $j^{th}$ antenna in the N antennas and that is determined based on the element spacing. i is any integer from 1 to N, and j is an integer value other than i from 1 to N.

For descriptions of the antenna parameter and the element spacing, refer to the foregoing related descriptions. Details are not described herein again.

For example, under the $m^{th}$ group of coefficient combinations in the M groups of coefficient combinations, a difference $\beta_j$ between the phase difference of the first coefficient combination and the phase difference of the second coefficient combination satisfies:

$$\beta_j = \left(h_i - h_j\right) - \left(h_i{}' - h_j{}'\right) \qquad (8)$$

Herein, $h_i$ represents the $i^{th}$ channel coefficient in the N channel coefficients corresponding to the first terminal. $h_j$ represents the $j^{th}$ channel coefficient in the N channel coefficients corresponding to the first terminal. $h_i{}'$ represents an $i^{th}$ channel coefficient in the N channel coefficients corresponding to the second terminal. $h_j{}'$ represents a $j^{th}$ channel coefficient in the N channel coefficients corresponding to the second terminal.

Because the value of j is an integer other than i from 1 to N, the phase difference sequence corresponding to the difference between the phase difference of the first coefficient combination and the phase difference of the second coefficient combination may be a sequence formed by $\beta_j$.

With reference to the example in which N=3, m is an integer from 1 to 6, that is, m=1, 2, ..., or 6, i is any integer from 1 to 3, that is, i=1, 2, or 3, and j is an integer value other than i from 1 to 3. For example, when i=1, values of j are 2 and 3. The group of coefficient combinations (h1, h2, h3) and (h1', h2', h3') are used as an example. When i=3, differences between phase differences under the group of coefficient combinations satisfy:

$$\beta_1 = \left(h_3 - h_1\right) - \left(h_3{}' - h_1{}'\right), \ \ \beta_2 = \left(h_3 - h_2\right) - \left(h_3{}' - h_2{}'\right)$$

In this case, a phase difference sequence corresponding to the differences between the phase differences is $\beta_1$, $\beta_2$.

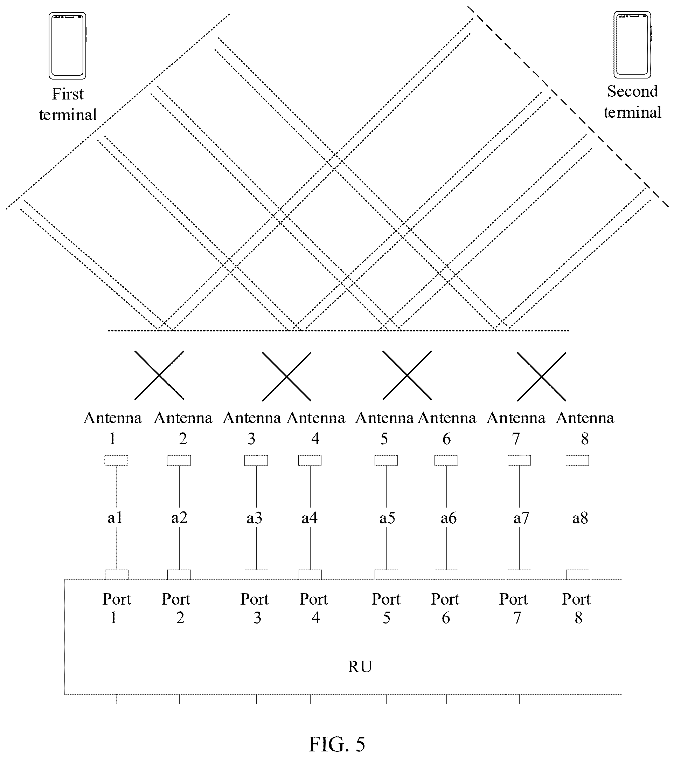

With reference to FIG. 5, the following describes the equal phase difference sequence determined based on the antenna parameter.

As shown in FIG. 5, eight LOS channels are formed between one antenna of a first terminal and eight antennas of a network device, eight LOS channels are formed between one antenna of a second terminal and the eight antennas of the network device, and the eight antennas are respectively connected to eight ports of an RU in a one-to-one manner.

It should be understood that, in an actual communication environment, phases between a plurality of ports of a radio unit and a plurality of antennas are inconsistent. For example, phases between the eight antennas and the eight ports of the radio unit in FIG. 5 are respectively $\alpha_k$, where $k$ = 1,2, ... ,8. $\alpha_k$ may be referred to as an initial phase, and the initial phase described herein is usually a random number.

For example, after the initial phase is introduced, for a plurality of antennas with a known antenna spacing (or referred to as an element spacing), a phase difference corresponding to a channel between one antenna of the first terminal and an $i^{th}$ antenna of the network device and a channel between the antenna of the first terminal and a $j^{th}$ antenna of the network device satisfies:

$$\hat{\theta}_i - \hat{\theta}_j = \frac{j-i}{\lambda} \Delta_= \cdot 2\pi \cdot f(\varphi) + (\alpha_i - \alpha_j) \qquad (9)$$

Herein, $\hat{\theta}_i$ represents a phase corresponding to a channel between the antenna of the first terminal and the $i^{th}$ antenna of the network device. $\hat{\theta}_j$ represents a phase corresponding to a channel between the antenna of the first terminal and the $j^{th}$ antenna of the network device. $\alpha_i$ represents an initial phase corresponding to the $i^{th}$ antenna, and $\alpha_j$ represents an initial phase corresponding to the $j^{th}$ antenna.

It can be learned from the formula (9) that, after the initial phase is introduced, phase differences between the antenna of the first terminal and a plurality of antennas (the plurality of antennas are deployed at an equal spacing, and an antenna ordering is correct) of the network device is no an arithmetic sequence. Because the initial phase changes slowly, in other words, initial phases of all terminals connected to one network device are basically the same. Therefore, impact of a channel phase may be eliminated by using a phase difference between a plurality of terminals.

For example, a phase difference corresponding to channels between the second terminal and the $i^{th}$ antenna of the network device and between the second terminal and the $j^{th}$ antenna of the network device satisfies:

$$\tilde{\theta}_i - \tilde{\theta}_j = \frac{j-i}{\lambda} \Delta_= \cdot 2\pi \cdot f(\varphi) + (\alpha_i - \alpha_j) \qquad (10)$$

Herein, $\tilde{\theta}_i$ represents a phase corresponding to a channel between an antenna of the second terminal and the $i^{th}$ antenna of the network device. $\tilde{\theta}_j$ represents a phase corresponding to a channel between the antenna of the second terminal and the $j^{th}$ antenna of the network device. $\varphi$ represents an azimuth of the second terminal relative to the antenna of the network device. $f(\varphi)$ represents a trigonometric function with respect to the azimuth $\varphi$, for example, a cosine function.

In conclusion, a phase difference $\varepsilon_j$ between the phase difference of the first terminal and the phase difference of the second terminal satisfies:

$$\varepsilon_j = \left(\tilde{\theta}_i - \tilde{\theta}_j\right) - \left(\hat{\theta}_i - \hat{\theta}_j\right) = \frac{j-i}{\lambda} \Delta_= \cdot 2\pi \cdot [f(\varphi) - f(\varphi)] \qquad (11)$$

It can be learned from the formula (11) that a phase difference between phase differences of at least two terminals may meet a characteristic of an arithmetic sequence.

Because the value of j is an integer other than i from 1 to N, the equal phase difference sequence determined based on the antenna parameter may be a sequence formed by $\varepsilon_j$.

With reference to the example in which N=3, when i=3, phase differences between the $i^{th}$ antenna and the $j^{th}$ antenna satisfy:

$$\varepsilon_1 = \left(\tilde{\theta}_3 - \tilde{\theta}_1\right) - \left(\hat{\theta}_3 - \hat{\theta}_1\right) = \frac{1-3}{\lambda} \Delta_= \cdot 2\pi \cdot [f(\varphi) - f(\varphi)],$$

$$\varepsilon_2 = \left(\tilde{\theta}_3 - \tilde{\theta}_2\right) - \left(\hat{\theta}_3 - \hat{\theta}_2\right) = \frac{2-3}{\lambda} \Delta_= \cdot 2\pi \cdot [f(\varphi) - f(\varphi)].$$

In this case, the equal phase difference sequence determined based on the antenna parameter is $\varepsilon_1, \varepsilon_2$.

Therefore, an obtained $m^{th}$ utility value A in M utility values satisfies:

$$A = U(\beta_1, \beta_2, \varepsilon_1, \varepsilon_2)$$

The function U() may be a preset function, and may be a function for calculating a correlation coefficient, or a function for calculating a Euclidean distance. However, it should be understood that when the function is the function for calculating a Euclidean distance, a utility value of a target coefficient combination is less than a utility value of another coefficient combination in M groups of coefficient combinations.

It should be understood that the correlation coefficient represents a similarity degree between two phase difference sequences. To be specific, a larger correlation coefficient indicates a higher similarity degree, and a smaller correlation coefficient indicates a lower similarity degree. Therefore, when the M utility values corresponding to the M channel coefficients (or M utility values corresponding to M groups of channel coefficients) are different, the target coefficient combination should be a coefficient combination corresponding to a maximum utility value in the M utility values (or M groups of utility values). The Euclidean distance represents an error between two phase difference sequences. To be specific, a smaller Euclidean distance indicates a smaller error, and a larger Euclidean distance indicates a larger error. Therefore, when the M utility values corresponding to the M channel coefficients (or M utility values corresponding to M groups of channel coefficients) are different, the target coefficient combination should be a coefficient combination corresponding to a minimum utility value in the M utility values (or M groups of utility values).

For example, if a group of coefficient combinations with the maximum utility value is (h1, h2, h3) and (h1', h2', h3'), in the M groups of coefficient combinations, a determined target coefficient combination may be (h1, h2, h3) or (h1', h2', h3').

It should be understood that sequence numbers of the foregoing processes do not mean an execution sequence. The execution sequence of the processes should be determined based on functions and internal logic of the processes, and should not be construed as any limitation on implementation processes of embodiments of this application.

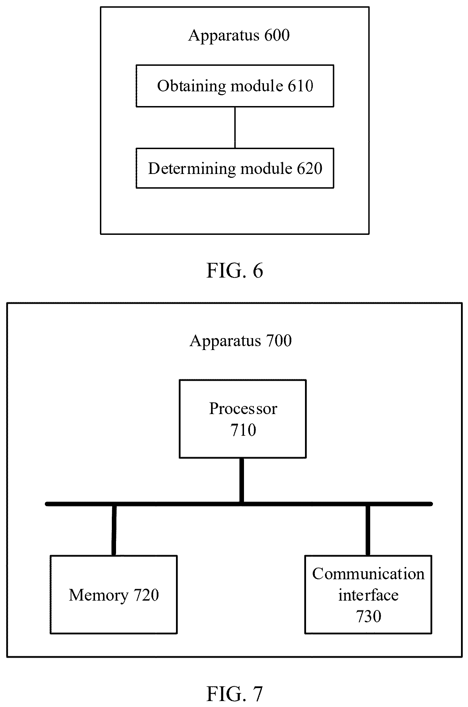

The foregoing describes in detail the method in embodiments of this application with reference to FIG. 1 to FIG. 5. The following describes in detail an apparatus in embodiments of this application with reference to FIG. 6 and FIG. 7.

FIG. 6 shows an antenna ordering determining apparatus 600 according to an embodiment of this application. As shown in FIG. 6, the apparatus 600 includes an obtaining module 610 and a determining module 620.

The obtaining module 610 is configured to obtain a plurality of channel coefficients, where the plurality of channel coefficients include N channel coefficients corresponding to a first terminal, the N channel coefficients include channel coefficients of LOS channels between one antenna of the first terminal and N antennas of a network device, and N is an integer greater than 1. The determining module 620 is configured to: determine a target coefficient combination in M coefficient combinations corresponding to the first terminal, where a utility value of the target coefficient combination is greater than a utility value of another coefficient combination in the M coefficient combinations, each coefficient combination includes the N channel coefficients, the N channel coefficients included in any two of the M coefficient combinations are arranged in different manners, $M=N!$ or $M=(N!)/(2^k)$, N! represents a factorial of N, and M and k are positive integers; and determine a target antenna ordering based on a sequence of channel coefficients in the target coefficient combination.

Optionally, the N channel coefficients are obtained from N ports of a radio unit RU, and the N ports of the radio units are respectively connected to the N antennas.

Optionally, the M coefficient combinations correspond to M utility values. An $m^{th}$ utility value in the M utility values is: under an $m^{th}$ coefficient combination in the M coefficient combinations, a correlation coefficient between a phase difference sequence corresponding to channel coefficients and an equal phase difference sequence determined based on an antenna parameter. The phase difference sequence corresponding to the channel coefficients is a sequence formed by a phase difference between an $i^{th}$ channel coefficient and a $j^{th}$ channel coefficient in the N channel coefficients. The equal phase difference sequence determined based on the antenna parameter is a sequence formed by a phase difference that is between an $i^{th}$ antenna and a $j^{th}$ antenna in the N antennas and that is determined based on an element spacing. i is any integer from 1 to N, j is an integer value other than i from 1 to N, and m is an integer from 1 to M.

Optionally, the plurality of channel coefficients further include N channel coefficients corresponding to a second terminal, and the N channel coefficients corresponding to the second terminal include channel coefficients of LOS channels between one antenna of the second terminal and the N antennas of the network device. The determining module 620 is specifically configured to: obtain M groups of coefficient combinations based on the M coefficient combinations corresponding to the first terminal and M coefficient combinations corresponding to the second terminal, where an $m^{th}$ group of coefficient combinations in the M groups of coefficient combinations includes a first coefficient combination and a second coefficient combination, the first coefficient combination is an $m^{th}$ coefficient combination in the M coefficient combinations corresponding to the first terminal, the second coefficient combination is an $m^{th}$ coefficient combination in the M coefficient combinations corresponding to the second terminal, an arrangement sequence of channel coefficients in the first coefficient combination is the same as an arrangement sequence of channel coefficients in the second coefficient combination, and m is an integer from 1 to M; and determine, based on the M groups of coefficient combinations, the target coefficient combination in the M coefficient combinations corresponding to the first terminal.

Optionally, the M groups of coefficient combinations correspond to M utility values. An $m^{th}$ utility value in the M utility values is: under the $m^{th}$ group of coefficient combinations in the M groups of coefficient combinations, a correlation coefficient between a phase difference sequence corresponding to a difference between a phase difference of the first coefficient combination and a phase difference of the second coefficient combination and an equal phase difference sequence determined based on an antenna parameter. The phase difference of the first coefficient combination is a phase difference between an $i^{th}$ channel coefficient and a $j^{th}$ channel coefficient in the N channel coefficients. The phase difference of the second coefficient combination is a phase difference between an $i^{th}$ channel coefficient and a $j^{th}$ channel coefficient in the N channel coefficients. The equal phase difference sequence determined based on the antenna parameter is a sequence formed by a phase difference that is between an $i^{th}$ antenna and a $j^{th}$ antenna in the N antennas and that is determined based on an element spacing. i is any integer from 1 to N, and j is an integer value other than i from 1 to N.

In an optional example, a person skilled in the art may understand that the apparatus 600 may be specifically the network device in the foregoing embodiments, and the apparatus 600 may be configured to perform steps and/or procedures in the foregoing method 300. To avoid repetition, details are not described herein again.

It should be understood that the apparatus 600 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described functions. In an optional example, a person skilled in the art may understand that, the apparatus 600 may be specifically the network device in the foregoing embodiments or functions of the network device in the foregoing embodiments may be integrated into the apparatus 600, and the apparatus 600 may be configured to perform procedures and/or steps corresponding to the network device in the foregoing method embodiments. To avoid repetition, details are not described herein again.

The apparatus 600 has a function for implementing the corresponding steps performed by the network device in the foregoing method. The function may be implemented by hardware, or may be implemented by hardware executing corresponding software. The hardware or the software includes one or more modules corresponding to the function. For example, the obtaining module 610 may be a communication interface.

FIG. 7 shows another communication apparatus 700 according to an embodiment of this application. The apparatus 700 includes a processor 710, a memory 720, and a communication interface 730. The processor 710, the memory 720, and the communication interface 730 are connected via an internal connection path. The memory 720 is configured to store instructions, and the processor 710 is configured to execute the instructions stored in the memory 720, to enable the apparatus 700 to perform the communication method provided in the foregoing method embodiments.

It should be understood that functions of the apparatus 600 in the foregoing embodiment may be integrated into the apparatus 700, and the apparatus 700 may be configured to perform steps and/or procedures corresponding to the network device in the foregoing method embodiments.

Optionally, the memory 720 includes a read-only memory and a random access memory, and provides instructions and data to the processor. A part of the memory may further include a non-volatile random access memory. For example, the memory may further store information of a device type. The processor 710 may be configured to execute the instructions stored in the memory. In addition, when executing the instructions, the processor 710 may perform the steps and/or procedures corresponding to the terminal device in the foregoing method embodiments, or the processor 710 may perform the steps and/or procedures corresponding to the network device in the foregoing method embodiments.

It should be understood that in embodiments of this application, the processor 710 may be a central processing unit (central processing unit, CPU), or the processor 710 may be another general-purpose processor, digital signal processor (digital signal processor, DSP), ASIC, field programmable gate array (field programmable gate array, FPGA) or another programmable logic device, discrete gate or transistor logic device, a discrete hardware component, or the like. The processor 710 may be a microprocessor, any conventional processor, or the like.

In an implementation process, steps in the foregoing method can be implemented by using a hardware integrated logic circuit in the processor, or by using instructions in a form of software. The steps in the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor executes the instructions in the memory and completes the steps in the foregoing method in combination with hardware of the processor. To avoid repetition, details are not described herein again.

This application further provides a computer-readable medium, storing a computer program. When the computer program is executed by a computer, functions of the network device in the foregoing method embodiments are implemented.

This application further provides a computer program product. When the computer program product is executed by a computer, functions of the network device in the foregoing method embodiments are implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, reference may be made to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An antenna ordering determining method, comprising:

   obtaining a plurality of channel coefficients, wherein the plurality of channel coefficients comprise N channel coefficients corresponding to a first terminal, the N channel coefficients comprise channel coefficients of line-of-sight LOS channels between one antenna of the first terminal and N antennas of a network device, and N is a positive integer;
   determining a target coefficient combination in M coefficient combinations corresponding to the first terminal, wherein a utility value of the target coefficient combination is greater than a utility value of another coefficient combination in the M coefficient combinations, each coefficient combination comprises the N channel coefficients, the N channel coefficients comprised in any two of the M coefficient combinations are arranged in different manners, $M=N!$ or $M=(N!)/(2^k)$, N! represents a factorial of N, and M and k are positive integers; and
   determining, based on a sequence of channel coefficients in the target coefficient combination, whether an antenna ordering is correct.

2. The method according to claim 1, wherein the N channel coefficients are obtained from N ports of a radio unit, and the N ports of the radio unit are respectively connected to the N antennas.

3. The method according to claim 1 or 2, wherein the M coefficient combinations correspond to M utility values, and an $m^{th}$ utility value in the M utility values is: under an $m^{th}$ coefficient combination in the M coefficient combinations, a correlation coefficient between a phase difference sequence corresponding to channel coefficients and an equal phase difference sequence determined based on an antenna parameter, the phase difference sequence corresponding to the channel coefficients is a sequence formed by a phase difference between an $i^{th}$ channel coefficient and a $j^{th}$

channel coefficient in the N channel coefficients, the equal phase difference sequence determined based on the antenna parameter is a sequence formed by a phase difference that is between an $i^{th}$ antenna and a $j^{th}$ antenna in the N antennas and that is determined based on an element spacing, i is any integer from 1 to N, j is an integer value other than i from 1 to N, and m is an integer from 1 to M.

4. The method according to claim 1 or 2, wherein the plurality of channel coefficients further comprise N channel coefficients corresponding to a second terminal, and the N channel coefficients corresponding to the second terminal comprise channel coefficients of LOS channels between one antenna of the second terminal and the N antennas of the network device; and

determining the target coefficient combination in the M coefficient combinations corresponding to the first terminal comprises:

obtaining M groups of coefficient combinations based on the M coefficient combinations corresponding to the first terminal and the M coefficient combinations corresponding to the second terminal, wherein an $m^{th}$ group of coefficient combinations in the M groups of coefficient combinations comprises a first coefficient combination and a second coefficient combination, the first coefficient combination is an $m^{th}$ coefficient combination in the M coefficient combinations corresponding to the first terminal, the second coefficient combination is an $m^{th}$ coefficient combination in the M coefficient combinations corresponding to the second terminal, an arrangement sequence of channel coefficients in the first coefficient combination is the same as an arrangement sequence of channel coefficients in the second coefficient combination, and m is an integer from 1 to M; and
determining, based on the M groups of coefficient combinations, the target coefficient combination in the M coefficient combinations corresponding to the first terminal.

5. The method according to claim 4, wherein the M groups of coefficient combinations correspond to M utility values, and an $m^{th}$ utility value in the M utility values is: under the $m^{th}$ group of coefficient combinations in the M groups of coefficient combinations, a correlation coefficient between a phase difference sequence corresponding to a difference between a phase difference of the first coefficient combination and a phase difference of the second coefficient combination and an equal phase difference sequence determined based on an antenna parameter, wherein
the phase difference of the first coefficient combination is a phase difference between an $i^{th}$ channel coefficient and a $j^{th}$ channel coefficient in the N channel coefficients, the phase difference of the second coefficient combination is a phase difference between an $i^{th}$ channel coefficient and a $j^{th}$ channel coefficient in the N channel coefficients, and the equal phase difference sequence determined based on the antenna parameter is a sequence formed by a phase difference that is between an $i^{th}$ antenna and a $j^{th}$ antenna in the N antennas and that is determined based on an element spacing, wherein i is any integer from 1 to N, and j is an integer value other than i from 1 to N.

6. An antenna ordering determining apparatus, comprising:

an obtaining module, configured to obtain a plurality of channel coefficients, wherein the plurality of channel coefficients comprise N channel coefficients corresponding to a first terminal, the N channel coefficients comprise channel coefficients of line-of-sight LOS channels between one antenna of the first terminal and N antennas of a network device, and N is an integer greater than 1; and
a determining module, configured to: determine a target coefficient combination in M coefficient combinations corresponding to the first terminal, wherein a utility value of the target coefficient combination is greater than a utility value of another coefficient combination in the M coefficient combinations, each coefficient combination comprises the N channel coefficients, the N channel coefficients comprised in any two of the M coefficient combinations are arranged in different manners, M=N! or M=(N!)/($2^k$), N! represents a factorial of N, and M and k are positive integers; and determine, based on a sequence of channel coefficients in the target coefficient combination, whether an antenna ordering is correct.

7. The apparatus according to claim 6, wherein the N channel coefficients are obtained from N ports of a radio unit, and the N ports of the radio unit are respectively connected to the N antennas.

8. The apparatus according to claim 6 or 7, wherein the M coefficient combinations correspond to M utility values, and an $m^{th}$ utility value in the M utility values is: under an $m^{th}$ coefficient combination in the M coefficient combinations, a correlation coefficient between a phase difference sequence corresponding to channel coefficients and an equal phase difference sequence determined based on an antenna parameter, the phase difference sequence corresponding to the channel coefficients is a sequence formed by a phase difference between an $i^{th}$ channel coefficient and a $j^{th}$ channel coefficient in the N channel coefficients, the equal phase difference sequence determined based on the antenna parameter is a sequence formed by a phase difference that is between an $i^{th}$ antenna and a $j^{th}$ antenna in the N antennas and that is determined based on an element spacing, i is any integer from 1 to N, j is an integer value other than i from 1 to N, and m is an integer from 1 to M.

9. The apparatus according to claim 6 or 7, wherein the plurality of channel coefficients further comprise N channel coefficients corresponding to a second terminal, and the N channel coefficients corresponding to the second terminal comprise channel coefficients of LOS channels between one antenna of the second terminal and the N antennas of the network device; and
the determining module is specifically configured to determine the target coefficient combination in the M coefficient combinations corresponding to the first terminal and M coefficient combinations corresponding to the second terminal, wherein an arrangement manner of channel coefficients in an $m^{th}$ coefficient combination in the M coefficient combinations corresponding to the first terminal is the same as an arrangement manner of channel coefficients in an $m^{th}$ coefficient combination in the M coefficient combinations corresponding to the second terminal, and m is an integer from 1 to M.

10. The apparatus according to claim 9, wherein M groups of coefficient combinations correspond to M utility values, each of the M groups of coefficient combinations comprises a first coefficient combination and a second coefficient combination, the first coefficient combination is one of the M coefficient combinations corresponding to the first terminal, the second coefficient combination is one of the M coefficient combinations corresponding to the second terminal, and an arrangement sequence of channel coefficients in the first coefficient combination is the same as an arrangement sequence of channel coefficients in the second coefficient combination; and

an $m^{th}$ utility value in the M utility values is: under an $m^{th}$ group of coefficient combinations in the M groups of coefficient combinations, a correlation coefficient between a phase difference sequence corresponding to a difference between a phase difference of the first coefficient combination and a phase difference of the second coefficient combination and an equal phase difference sequence determined based on an antenna parameter, wherein
the phase difference of the first coefficient combination is a phase difference between an $i^{th}$ channel coefficient and a $j^{th}$ channel coefficient in the N channel coefficients, the phase difference of the second coefficient combination is a phase difference between an $i^{th}$ channel coefficient and a $j^{th}$ channel coefficient in the N channel coefficients, and the equal phase difference sequence determined based on the antenna parameter is a sequence formed by a phase difference that is between an $i^{th}$ antenna and a $j^{th}$ antenna in the N antennas and that is determined based on an element spacing, wherein i is any integer from 1 to N, and j is an integer value other than i from 1 to N.

11. An antenna ordering determining apparatus, comprising a memory and a processor, wherein

the memory is configured to store program code; and
the processor is configured to invoke the program code to perform the method according to any one of claims 1 to 5.

12. A computer-readable storage medium, storing a computer program, wherein when the computer program is executed by a processor, the method according to any one of claims 1 to 5 is performed.

13. A computer program product, comprising a computer program, wherein when the computer program is run, the computer is enabled to perform the method according to any one of claims 1 to 5.

14. A system, wherein the system comprises at least two network devices, and at least one of the at least two network devices is configured to perform the method according to any one of claims 1 to 5.

100

110                              120

FIG. 1

FIG. 2

300

```
┌────────────────────────────────────────────┐      S301
│                                            │   ─
│   Obtain a plurality of channel coefficients │
│                                            │
└────────────────────────────────────────────┘
                     │
                     │
┌────────────────────────────────────────────┐      S302
│  Determine a target coefficient combination in M │   ─
│  coefficient combinations corresponding to a first │
│                  terminal                   │
└────────────────────────────────────────────┘
                     │
                     │
┌────────────────────────────────────────────┐      S303
│   Determine, based on a sequence of channel  │   ─
│  coefficients in the target coefficient combination, │
│   whether an antenna ordering is correct     │
└────────────────────────────────────────────┘
```

FIG. 3

First terminal

Antenna 1    Antenna 2    Antenna 3    Antenna 4    Antenna 5    Antenna 6    Antenna 7    Antenna 8

Port 1    Port 2    Port 3    Port 4    Port 5    Port 6    Port 7    Port 8

RU

FIG. 4

FIG. 5

Apparatus 600

Obtaining module 610

Determining module 620

FIG. 6

Apparatus 700

Processor
710

Memory 720

Communication
interface
730

FIG. 7

# EP 4 675 944 A1

## INTERNATIONAL SEARCH REPORT

| | International application No. |
|---|---|
| | **PCT/CN2024/082615** |

### A. CLASSIFICATION OF SUBJECT MATTER

H04B 17/30(2015.01)i;  H04L 43/0811(2022.01)i

According to International Patent Classification (IPC) or to both national classification and IPC

### B. FIELDS SEARCHED

Minimum documentation searched (classification system followed by classification symbols)

IPC: H04B, H04L, H04W

Documentation searched other than minimum documentation to the extent that such documents are included in the fields searched

Electronic data base consulted during the international search (name of data base and, where practicable, search terms used)

CNTXT: CNKI; VEN; ENTXTC; 3GPP: 线序, 天线, 射频单元, RU, 连接, 错误, 检测, 顺序, 手动, 人工, line sequence, antenna, radio unit, connect+, incorrect, wrong, detect+, manual

### C. DOCUMENTS CONSIDERED TO BE RELEVANT

| Category* | Citation of document, with indication, where appropriate, of the relevant passages | Relevant to claim No. |
|---|---|---|
| A | CN 113315590 A (SHANGHAI HUAWEI TECHNOLOGIES CO., LTD.) 27 August 2021 (2021-08-27) <br> description, paragraphs 50-128 | 1-14 |
| A | CN 106330345 A (ZTE CORP.) 11 January 2017 (2017-01-11) <br> entire document | 1-14 |
| A | CN 114424505 A (HUAWEI TECHNOLOGIES CO., LTD.) 29 April 2022 (2022-04-29) <br> entire document | 1-14 |
| A | CN 115801068 A (ZTE CORP.) 14 March 2023 (2023-03-14) <br> entire document | 1-14 |
| A | US 2020328831 A1 (HUAWEI TECHNOLOGIES CO., LTD.) 15 October 2020 (2020-10-15) <br> entire document | 1-14 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 May 2024** | **10 May 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/082615** |

| Patent document cited in search report | | | Publication date (day/month/year) | Patent family member(s) | | | Publication date (day/month/year) |
| --- | --- | --- | --- | --- | --- | --- | --- |
| CN | 113315590 | A | 27 August 2021 | None | | | |
| CN | 106330345 | A | 11 January 2017 | EP | 3316491 | A1 | 02 May 2018 |
| | | | | EP | 3316491 | A4 | 27 June 2018 |
| | | | | EP | 3316491 | B1 | 12 August 2020 |
| | | | | US | 2018198205 | A1 | 12 July 2018 |
| | | | | US | 10680328 | B2 | 09 June 2020 |
| | | | | JP | 2018523345 | A | 16 August 2018 |
| | | | | JP | 6456523 | B2 | 23 January 2019 |
| | | | | WO | 2017000552 | A1 | 05 January 2017 |
| CN | 114424505 | A | 29 April 2022 | None | | | |
| CN | 115801068 | A | 14 March 2023 | None | | | |
| US | 2020328831 | A1 | 15 October 2020 | US | 11323190 | B2 | 03 May 2022 |
| | | | | WO | 2019127470 | A1 | 04 July 2019 |
| | | | | EP | 3723305 | A1 | 14 October 2020 |
| | | | | EP | 3723305 | A4 | 23 December 2020 |
| | | | | BR | 112020012815 | A2 | 24 November 2020 |
| | | | | KR | 20200101965 | A | 28 August 2020 |
| | | | | KR | 102352089 | B1 | 17 January 2022 |
| | | | | JP | 2021508969 | A | 11 March 2021 |
| | | | | JP | 7191960 | B2 | 19 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310335664